**Europäisches Patentamt**

**European Patent Office**

**Office européen des brevets**

(19)

(11) Veröffentlichungsnummer : **0 349 871 B1**

(12)

# EUROPÄISCHE PATENTSCHRIFT

(45) Veröffentlichungstag der Patentschrift :
06.05.92 Patentblatt 92/19

(51) Int. Cl.⁵ : **B23B 27/16**

(21) Anmeldenummer : **89111568.5**

(22) Anmeldetag : **24.06.89**

(54) Schneidplatte für spanabhebende Bearbeitung.

(30) Priorität : **08.07.88 DE 3823199**

(43) Veröffentlichungstag der Anmeldung :
**10.01.90 Patentblatt 90/02**

(45) Bekanntmachung des Hinweises auf die
Patenterteilung :
**06.05.92 Patentblatt 92/19**

(84) Benannte Vertragsstaaten :
**AT BE CH DE ES FR GB GR IT LI LU NL SE**

(56) Entgegenhaltungen :
**GB-A- 1 578 729**
**GB-A- 2 054 418**
**US-A- 4 552 491**
**US-A- 4 681 488**

(73) Patentinhaber : **Stora Feldmühle
Aktiengesellschaft
Feldmühleplatz 1
W-4000 Düsseldorf 11 (DE)**

(72) Erfinder : **Roos, Erwin
Wilhelmstrasse 18
W-7310 Plochingen (DE)**

EP 0 349 871 B1

**Beschreibung**

Die Erfindung betrifft eine polygonale Wendeschneidplatte mit abgerundeten Schneidecken und einer entlang der Schneidkanten verlaufenden als Doppelfase ausgebildeten Schutzfase.

Übliche Wendeschneidplatten werden bisher mit vier unterschiedlichen Schneidkantengeometrien eingesetzt. Sie können scharfkantig sein, was bei Wendeschneidplatten aus Schneidkeramik ausgesprochen selten ausgeführt wird, weil diese scharfe Kante sehr bruchempfindlich ist. Sie können ferner eine einfache, umlaufende Schutzfase aufweisen oder mit einer Doppelfase versehen sein. Bestimmte Konstruktionen weisen ferner eine sogenannte TSD-Fase auf, eine Fase, die im Bereich der Eckenradien als Kegelstumpf ausgeführt ist.

Die Aufgabe der umlaufenden Fase ist, Ausbrüche an Wendeschneidplatten aus Keramik oder ggf. anderen Hartstoffen zu verhindern und damit eine Zerstörung der Schneidplatten zu vermeiden. Der Nachteil der Fasen, insbesondere der Doppelfasen ist, daß durch die Abstumpfung der Schneidkante eine höhere Belastung der Schneidplatte auftritt, die im Bereich der Schneidecken zu Ausbrüchen führen kann.

Aufgabe der vorliegenden Erfindung ist daher, bei einer aus Hartstoffen bestehenden Schneidplatte den Eckenradienbereich so zu verstärken, daß die Gefahr von Ausbrüchen oder Brüchen weitgehend ausgeschaltet wird.

Bei einer gattungsgemäßen Schneidplatte wird das durch die Kombination der im kennzeichnenden Teil des Anspruchs 1 genannten Merkmale gelöst. Durch die Kombination von Winkel und Breite der Primär- und der Sekundärfase ergibt sich bereits eine sehr standfeste Schneidkantengeometrie, die gegenüber einer einfachen Schutzfase eine wesentlich höhere Sicherheit gegen Kantenausbrüche bietet. Gleichzeitig wird die Schneidleistung der Platte gegenüber einer einfachen Fase verbessert, d. h. die auftretenden Schneidkräfte werden durch die Winkelkombination in Verbindung mit den angegebenen Fasen verringert. Die Passivkräfte im Bereich der Schneidplatte werden also reduziert. Gleichzeitig wird gemäß der Erfindung der Eckenradienbereich, der einer sehr starken Beanspruchung unterliegt, stabilisiert.

Die erfindungsgemäße Schneidplatte kann vorteilhaft heißgepreßt werden und im Anschluß daran mit einer primärfase danach mit einer Sekundärfase versehen werden. Dieses Herstellungsverfahren ist besonders dann von Vorteil, wenn Keramiken, wie Siliziumnitrid verwandt werden und die Preßform einfach gehalten werden muß. Kommt Aluminiumoxid als Material für die Schneidplatten zum Einsatz, so wird ein Verfahren bevorzugt, bei dem die umlaufende Primärfase gleich an den Grünling angepreßt wird und erst im Anschluß daran die Sinterung erfolgt. Die Sekundärfase wird dann zu einem späteren Zeitpunkt durch Anschleifen angebracht.

Unabhängig davon, wie die primärfase an der Schneidplatte angebracht wurde, ist ein besonders bevorzugtes Verfahren im Anbringen der Sekundärfase darin zu sehen, daß das Anschleifen der Sekundärfase auf einem umlaufenden Schleiftisch erfolgt. Die Schneidplatten sind dabei entlang der periphere angeordnet. Dabei bildet jeweils eine Schneidkante einer Schneidplatte eine Tangente an den Kreis, der im wesentlichen den Durchmesser des Rundtisches der Schleifmaschine aufweist. Der Rundtisch läuft um, während gleichzeitig eine Schleifscheibe im Eingriff mit einer Schneidkante einer Schneidplatte steht, so daß an diese eine Sekundärfase angeschliffen wird, die im Bereich der Schneidecken der Schneidkante breiter ist als im Bereich der Mitte der Schneidkante. Ist nach mehreren Umläufen des Rundtisches die gewünschte Sekundärfasenbreite erreicht, so werden die einzelnen Schneidplatten gedreht, so daß eine neue noch nicht bearbeitete Schneidkante jetzt an der Stelle liegt, die vorher von der bereits fertig bearbeiteten eingenommen wurde. Dieser Vorgang wird so lange wiederholt, bis alle Schneidkanten mit einer Sekundärfase versehen sind, d. h., daß bei den Wendeschneidplatten die Schneidplatten noch gewendet und im Anschluß daran wieder jeweils um eine Schneidkante gedreht werden.

Eine zweckmäßige Ausgestaltung dieses Verfahrens sieht vor, daß die Deckflächen der Schneidplatten unter einem Winkel β zum Rundtisch angeordnet sind und die Schleifscheibe parallel zur Oberfläche des Rundtisches geführt wird. Der Winkel β′ beträgt dabei vorzugsweise 5 bis 15 Grad. An den Schneidplatten ergibt sich dadurch ein Winkel β, der ebenfalls zwischen 5 bis 15 Grad liegt. Der Winkel γ liegt damit zwischen 10 und 20 Grad. Desweiteren ergibt sich, daß die Sekundärfase in ihrer Breite kontinuierlich von der Schneidspitze zur Mitte der Schneidkanten abnimmt.

Eine weitere bevorzugte Ausgestaltung der Erfindung sieht vor, daß die Fasenübergänge verrundet sind.

Die Erfindung wird nachstehend anhand der Zeichnungen erläutert, wobei die Fig. 1 bis 4 den Stand der Technik zeigen.

Fig. 1 zeigt eine scharfkantige Schneidplatte,
Fig. 1A die Schneidplatte im Schnitt,
Fig. 2 eine Schneidplatte mit einer einfachen, umlaufenden Schutzfase,
Fig. 2A diese Schneidplatte im Schnitt,
Fig. 3 eine Schneidplatte mit umlaufender Doppelfase,
Fig. 3A den Schnitt durch die Platte,

2

Fig. 4 eine TSD-Fase,

Fig. 4A den Schnitt durch die Fig. 4,

Fig. 5 eine Schneidplatte mit verstärktem Schneideckenbereich,

Fig. 5A den Schnitt entlang A-A als Vergrößerung,

Fig. 5B den Schnitt entlang B-B als Vergrößerung

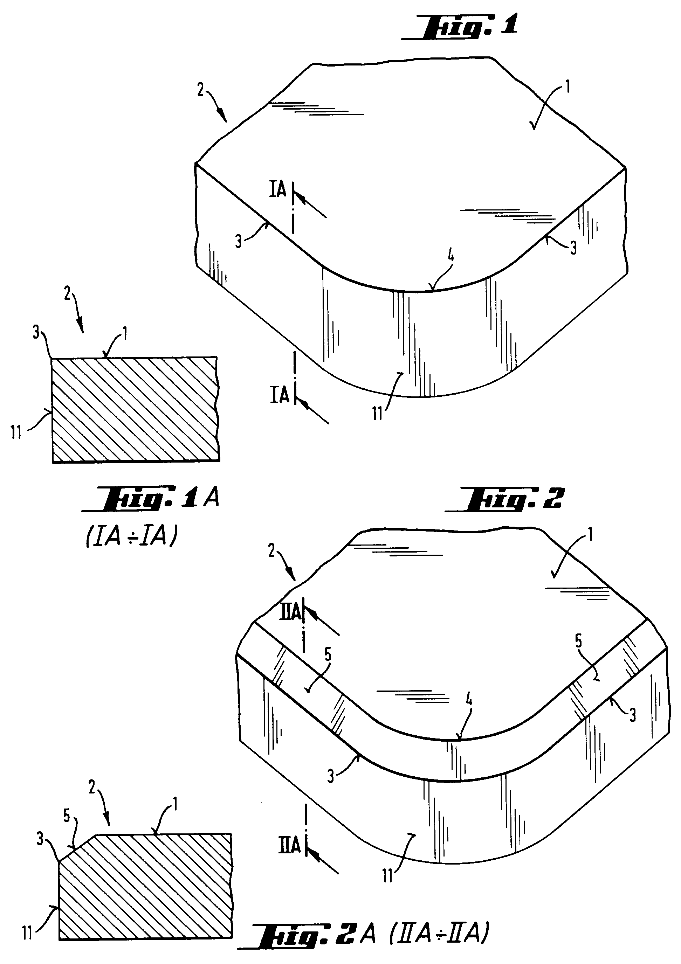

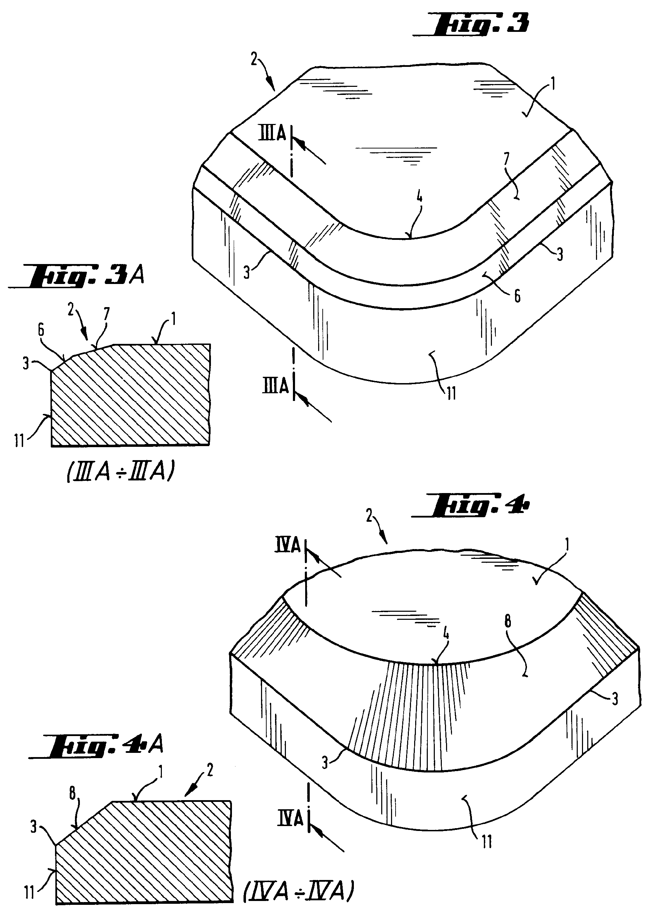

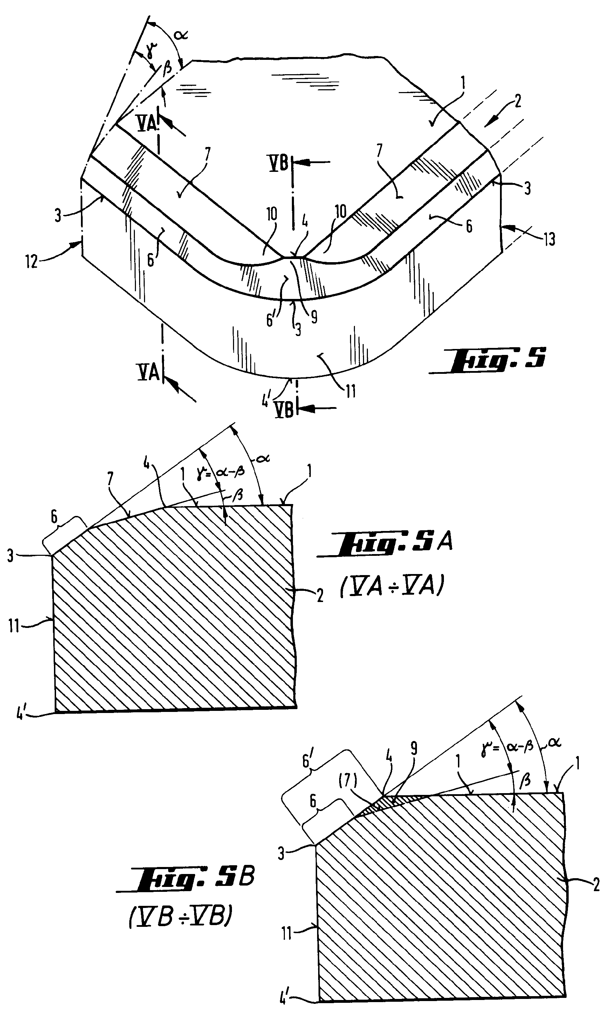

Die Schneidplatte (2) ist in den Fig. 1 bis 5 als einfache Schneidplatte (2) und nicht als Wendeschneidplatte dargestellt. Sie besitzt eine Deckfläche (1), die gemäß Fig. 1, 1A von der umlaufenden, scharfkantigen Schneidkante (3) begrenzt ist. Im Bereich der Ecken geht die Schneidkante (3) in den Eckenradius (4) über. Durch Anordnen einer einfachen Schutzfase (5) an der Schneidplatte (2) ergibt sich eine Verlagerung der Schneidkante (3) in den unteren Bereich, wie dieses in Fig. 2 und 2A dargestellt ist. Wird, wie in Fig. 3 und 3A dargestellt, eine Doppelfase angebracht, so ergibt sich eine weitere Verlagerung der Schneidkante (3) nach unten, d. h. in den Bereich, wo die Primärfase (6) an der umlaufenden Begrenzungsfläche (11) der Schneidplatte (2) angreift.

Die Fig. 4 stellt eine Sonderausführungsform von Fig 2 dar. Hier ist im Bereich des Eckenradius (4) die Fase als TSD-Fase, also als Kegelstumpffase (8) ausgeführt.

Fig. 5, 5A und 5B stellen die erfindungsgemäße Ausführungsform dar. An den geraden Seiten (12, 13), die Teil der umlaufenden Begrenzungsfläche (11) sind, schließt sich mit Neigung ($\beta$) zur Deckfläche (1) die Sekundärfase (7) an, der die Primärfase (6) mit einer Neigung ($\alpha$ zur Deckfläche 1) folgt. Diese letztere (6) folgt auch dem Eckenradius (4, 4′).

Die Sekundärfase (7) jedoch läuft erfindungsgemäß zu beiden Seiten in Richtung auf den Eckenradius (4) gerade und aus diesem aus (gerade Fasenausläufe 10), folgt dort also nicht mehr der Primärfase (6). Dadurch entsteht im Eckenbereich (4) gegenüber den geraden Bereichen (12, 13) ein Verstärkungsbereich (9) in Fig. 5B, als engschraffiertes Dreieck (9) dargestellt, im Eckenradiusbereich (4, 4′). Somit wird die Primärfase (6) der geraden Bereiche (12, 13) dort durch den Verstärkungsbereich (9) als verstärkte Primärfase (6′) dem Eckenradienbereich (4, 4′) nachgeführt.

Die Primärfase (6′) reicht von der Schneidkante (3) bis zur nun hoch- und gleichzeitig vorgezogenen obersten Begrenzungskante im Eckenradienbereich (4, 4′).

## Patentansprüche

1. Polygonale Wendeschneidplatte mit abgerundeten Schneidecken und einer entlang der Schneidkante verlaufenden, als Doppelfase ausgebildeten Schutzfase, gekennzeichnet durch die Kombination folgender Merkmale:
die Doppelfase besteht aus einer Primärfase (6) mit einer Breite zwischen 0,05 und 0,5 mm und einer Neigung $\alpha$ gegenüber der Deckfläche (1) zwischen 20 und 35 Grad sowie einer Sekundärfase (7) mit einer Breite zwischen 0,5 und 3,0 mm und einer Neigung $\beta$ gegenüber der Deckfläche (1) von 5 Grad bis 15 Grad, Primär- (6) und Sekundärfase (7) verlaufen unter einem Winkel $\gamma$ zueinander, die Sekundärfase (7) läuft im Bereich der Eckenradien (4) in einen ausschließlich durch die Primärfase (6) gebildeten Verstärkungsbereich (9) aus.

2. Schneidplatte nach Anspruch 1, dadurch gekennzeichnet, daß der Winkel $\gamma$ 10 bis 20 Grad beträgt.

3. Schneidplatte nach einem der Ansprüche 1 und 2, dadurch gekennzeichnet, daß die Sekundärfase (7) in ihrer Breite kontinuierlich von der Schneidspitze zur Mitte der Schneidkante (3) abnimmt.

4. Schneidplatte nach einem der Ansprüche 1 bis 3, dadurch gekennzeichnet, daß die Fasenübergänge verrundet sind.

5. Verfahren zum Herstellen von polygonalen Wendeschneidplatten mit abgerundeten Schneidecken und einer entlang der Schneidkante verlaufenden, als Doppelfase ausgebildeten Schutzfase, nach einem der Ansprüche 1 bis 4, dadurch gekennzeichnet, daß aus einer keramischen Masse ein prismatischer Formkörper heißgepreßt wird und im Anschluß daran eine Primärfase und danach eine Sekundärfase entlang der Deckflächen des prismatischen Körpers angeschliffen wird.

6. Verfahren zum Herstellen von polygonalen Wendeschneidplatten mit abgerundeten Schneidecken und einer entlang der Schneidkante verlaufenden, als Doppelfase ausgebildeten Schutzfase, nach einem der Ansprüche 1 bis 4, dadurch gekennzeichnet, daß eine keramische Masse zu einem Grünling mit umlaufender Primärfase gepreßt, im Anschluß daran gesintert und nach der Sinterung mit einer Sekundärfase durch Anschleifen versehen wird.

7. Verfahren nach einem der Ansprüche 5 oder 6, dadurch gekennzeichnet, daß das Anschleifen der Sekundärfase auf einem umlaufenden Schleiftisch erfolgt, auf dem die Schneidplatten entlang seiner Peripherie so angeordnet sind, daß jeweils eine Schneidkante eine Tangente an einem Kreis mit dem Durchmesser des Rundtisches bildet, an diese Schneidkante die Sekundärfase angeschliffen, danach die Schneidplatte gedreht bzw. gewendet wird, so daß eine noch nicht bearbeitete Schneidkante jetzt die Tangente bildet und die Vorgänge so lange wiederholt werden, bis alle Schneidkanten mit einer Sekundärfase versehen sind.

8. Verfahren nach Anspruch 7, dadurch gekennzeichnet, daß die Deckflächen der Schneidplatten unter einem Winkel β′ zum Rundtisch angeordnet sind und die Schleifscheibe parallel zur Oberfläche des Rundtisches geführt wird.

9. Verfahren nach Anspruch 7 oder 8, dadurch gekennzeichnet, daß der Winkel β eine Größe zwischen 5 und 15 Grad aufweist.

**Claims**

1. A polygonal indexable cutting plate with rounded cutting corners, and a protective bevel in the form of a double bevel running along the cutting edge, characterized by the combination of the following features, the double bevel consists of a primary bevel (6) with a breadth between 0.05 and 0.5 mm and an inclination $\alpha$ to the top face (1) between 20 and 35 degrees, and of a secondary bevel (7) with a breadth between 0.5 and 3.0 mm and an inclination $\beta$ to the top face (1) of 5 degrees to 15 degrees, the primary bevel (6) and secondary bevel (7) extend at an angle $\gamma$ to one another, the secondary bevel (7) terminates in the region of the corner radii (4) in a strengthening region (9) formed exclusively by the primary bevel (6).

2. A cutting plate according to claim 1, characterized in that the angle $\gamma$ is 10 to 20 degrees.

3. A cutting plate according to one of claims 1 and 2, characterized in that the secondary bevel (7) decreases in breadth continuously from the cutting corner to the middle of the cutting edge (3).

4. A cutting plate according to one of claims 1 to 3, characterized in that the bevel transitions are rounded.

5. A process for producing polygonal indexable cutting plates with rounded cutting corners and a protective bevel in the form of a double bevel running along the cutting edge, according to one of claims 1 to 4, characterized in that a prismatic moulded body is hot-pressed from a ceramics mass and following that a primary bevel and afterwards a secondary bevel are ground along the top faces of the prismatic body.

6. A process for producing polygonal indexable cutting plates with rounded cutting corners and a protective bevel in the form of a double bevel running along the cutting edge, according to one of claims 1 to 4, characterized in that a ceramics mass is pressed to a green blank with a circumferential primary bevel, following that is sintered, and after sintering is provided with a secondary bevel by grinding.

7. A process according to one of claims 5 or 6, characterized in that grinding of the secondary bevel is effected on a rotating grinding table, on which the cutting plates are arranged along its periphery in such a way that in each case one cutting edge forms a tangent to a circle of the diameter of the circular table, the secondary bevel is ground onto this cutting edge, thereafter the cutting plate is rotated or turned so that an as yet unmachined cutting edge now forms the tangent, and the processes are repeated until all cutting edges have been provided with a secondary bevel.

8. A process according to claim 7, characterized in that the top faces of the cutting plates are arranged at an angle $\beta′$ to the circular table and the grinding wheel is guided parallel to the surface of the circular table.

9. A process according to claim 7 or 8, characterized in that the angle $\beta$ has a magnitude between 5 and 15 degrees.

**Revendications**

1. Plaquette de coupe amovible avec coins d'attaque arrondis et avec un biseau protecteur s'étendant le long de l'arête de coupe réalisé en tant que double biseau, caractérisée par la combinaison des caractéristiques suivantes:
le double biseau est constitué par un biseau primaire (6) ayant une largeur entre 0,05 et 0,5 mm et, par rapport à la face principale (1), une pente $\alpha$ entre 20 et 35 degrés, ainsi que par un biseau secondaire (7) ayant une largeur entre 0,5 et 3,0 mm et, par rapport à la face principale (1), une pente $\beta$ de 5 degrés à 15 degrés, le biseau primaire (6) et le biseau secondaire (7) forment entre eux un angle $\gamma$, le biseau secondaire (7) se termine dans la région des rayons (4) du coin d'attaque en aboutissant dans une zone de renforcement (9) formée exclusivement par le biseau primaire (6).

2. Plaquette de coupe selon revendication 1, caractérisée par le fait que l'angle $\gamma$ vaut de 10 à 20 degrés.

3. Plaquette de coupe selon l'une des revendications 1 et 2, caractérisée par le fait que la largeur du biseau secondaire (7) décroît de manière continue de la pointe du tranchant jusqu'au milieu de l'arête de coupe (3).

4. Plaquette de coupe selon l'une des revendications 1 à 3, caractérisée par le fait que les transitions des biseaux sont arrondies.

5. Procédé de fabrication de plaquettes de coupe polygonales amovibles dotées de coins d'attaque arrondis et d'un biseau de protection réalisé en tant que double biseau s'étendant le long de l'arête de coupe, selon l'une des revend/cations 1 à 4, caractérisé par le fait que l'on réalise par compression à chaud un corps prismatique à partir d'une masse céramique, à la suite, de quoi on forme par meulage un biseau primaire puis un biseau secondaire le long des faces principales du corps prismatique.

6. Procédé de fabrication de plaquettes de coupe polygonales amovibles dotées de coins d'attaque arrondis et d'un biseau de protection s'étendant le long de l'arête de coupe et aménagé en tant que double biseau, selon l'une des revendications 1 à 4, caractérisé par le fait que l'on comprime une masse céramique en formant une ébauche de compact avec biseau primaire périmétrique, après quoi on la fritte et après frittage on la munit d'un biseau secondaire par meulage.

7. Procédé selon l'une des revendications 5 ou 6, caractérisé par le fait que le meulage du biseau secondaire s'effectue sur une table de meulage tournante sur laquelle et le long de la périphérie de laquelle les plaquettes de coupe sont disposées de manière qu'une arête de coupe sont à chaque fois une tangente à un cercle ayant le diamètre de la table circulaire, on forme le biseau secondaire par meulage de cette arête de coupe, après quoi on tourne ou réoriente la plaquette de coupe de manière qu'une arête de coupe encore non usinée forme alors la tangente, et l'on répète l'opération jusqu'à ce que toutes les arêtes de coupe soient munies d'un biseau secondaire.

8. Procédé selon revendication 7, caractérisé par le fait que les faces principales de plaquettes de coupe sont agencées sous un angle $\beta'$ par rapport à la table circulaire, et la meule se déplace parallèlement à la surface de la table circulaire.

9. Procédé selon revendication 7 ou 8, caractérisé par le fait que l'angle $\beta$ est compris entre 5 et 15 degrés.

**Fig. 1**

**Fig. 1 A**
**(IA ÷ IA)**

**Fig. 2**

**Fig. 2 A (IIA ÷ IIA)**

_Fig. 3_

_Fig. 3A_

(ⅢA ÷ ⅢA)

_Fig. 4_

_Fig. 4A_

(ⅣA ÷ ⅣA)

**Fig. 5**

**Fig. 5 A**

$(\nabla A \div \nabla A)$

**Fig. 5 B**

$(\nabla B \div \nabla B)$

8